# EUROPEAN PATENT APPLICATION

(11) **EP 3 385 874 A1**
(43) Date of publication of application: **10.10.2018**
(21) Application number: 16871055.6
(22) Date of filing: 01.12.2016
(51) Int. Cl.: G06F 21/31, G06F 21/32, G06F 21/10

(54) **ELECTRONIC DEVICE AND METHOD FOR OPERATING SAME**

(30) Priority: 01.12.2015 KR 20150170037
(71) Applicant: Samsung Electronics Co., Ltd., Suwon-si, Gyeonggi-do 16677 (KR)
(72) Inventor: LEE, Chaekyung, Seoul 03321 (KR); KIM, Bo-Keun, Suwon-si Gyeonggi-do 16699 (KR); CHOI, Kyuok, Seoul 04381 (KR)
(74) Representative: Nederlandsch Octrooibureau
(86) International application number: PCT/KR2016/014039
(87) International publication number: WO 2017/095159

(57) **Abstract**

A method for operating an electronic device according to various embodiments comprises the steps of: receiving a first input; determining the validity of the first input; receiving a second input while maintaining the first input; and controlling a security mode function according to content corresponding to the second input. An electronic device according to various embodiments comprises: a display; an input unit for receiving an input; and a control unit functionally connected to the display unit and the input unit, wherein the control unit receives a first input through the input unit, determines the validity of the first input, receives a second input while maintaining the first input, and controls a security mode function according to content corresponding to the second input.

## Description

### Technical Field

The present disclosure relates to an electronic device and a method for operating the same and, for instance, relates to an electronic device for controlling a security function and a method for operating the same.

### Background Art

Commonly, electronic devices are added with various functions, to perform a compositive function. For example, the electronic devices can perform a mobile communication function, a data communication function, an image photographing function, a voice recording function, etc. In recent years, as functions of the electronic devices become diversified and improved, the electronic devices can store or use critical information of users. Accordingly to this, the electronic devices can perform a security function capable of protecting the critical information.

### Disclosure of Invention

### Technical Problem

The above electronic device may perform a security function by setting a separate password or setting an authentication procedure. Accordingly, an inconvenience is caused in which one has to input the password or go through the authentication procedure in order to execute content to which the security function has been set. Also, there is a problem that a user convenience is low because a password or authentication procedure required for each content to which the security function has been set is different. Various embodiments of the disclosure may set or release a security mode simply and conveniently.

### Solution to Problem

A method for operating an electronic device according to various embodiments includes receiving a first input, identifying the validity of the first input, receiving a second input while maintaining the first input, and controlling a security mode function according to content corresponding to the second input.

An electronic device according to various embodiments includes a display unit, an input unit for receiving an input, and a control unit operatively coupled with the display unit and the input unit. The control unit receives a first input through the input unit, identifies the validity of the first input, receives a second input while maintaining the first input, and controls a security mode function according to content corresponding to the second input.

### Advantageous Effects of Invention

Various embodiments may release a security mode of content and execute the content, by a simple operation. For example, various embodiments may simply execute the content, without inputting a separate password for content execution or going through a complex authentication process. Or, at a time a user executes content requiring a password input, the user may easily fast input a password temporarily (one time). That is, a user convenience may be improved in that there is no need to typewrite security information such as the password. Particularly, because a function requiring a password becomes recently many, it may be difficult to remember a password corresponding to a corresponding function, but one may easily find the password by outputting a password list and user's selecting. Also, various embodiments may improve security standards in that releasing a security mode by using user unique identification such as fingerprint.

Various embodiments may set a security mode by a simple operation. That is, various embodiments may solve that an inconvenience of security setting is caused because a security mode setting method is different every application. Various embodiments may set various contents in a security mode by the same operation.

### Brief Description of Drawings

FIG. 1 illustrates a block diagram of an electronic device according to various embodiments of the disclosure.
FIG. 2 is a flowchart illustrating a procedure of performing a method for operating an electronic device according to various embodiments.
FIG. 3 and FIG. 4 are example diagrams illustrating an implementation example of an electronic device according to various embodiments.
FIG. 5 is a flowchart of an operation of releasing a security mode in FIG. 2.
FIG. 6 to FIG. 8 illustrate example diagrams of a screen of an electronic device according to various embodiments.
FIG. 9 is a flowchart of a security mode release operation of FIG. 2.
FIG. 10 to FIG. 28 are example diagrams illustrating an implementation example of an electronic device according to various embodiments.
FIG. 29 and FIG. 30 are flowcharts illustrating a procedure of performing a method for operating an electronic device according to various embodiments.

### Best Mode for Carrying out the Invention

Hereinafter, various embodiments of the present document are mentioned below with reference to the accompanying drawings. An embodiment and the terms used in this do not intend to limit the technology mentioned in the present document to a specific embodiment form, and should be construed as including various changes of the corresponding embodiment, equivalents thereof, and/or alternatives thereof. In the drawings, like reference symbols may denote like constituent elements. The expression of a singular form may include the expression of a plural form unless otherwise dictating clearly in context. In the present document, the expressions "A or B", "at least one of A and/or B", etc. may include all available combinations of words enumerated together. The expressions "1st", "2nd", "first", "second", etc. may modify corresponding constituent elements irrespective of order and/or importance, and are just used to distinguish one constituent element from another constituent element and do not limit the corresponding constituent elements. When it is mentioned that any (e.g., 1st) constituent element is "(operatively or communicatively) coupled with/to" or is "connected to" another (e.g., 2nd) constituent element, the any constituent element may be directly coupled to the another constituent element, or be coupled through a further constituent element (e.g., a third constituent element).

The expression "configured (or set) to∼" used in the present document may be used interchangeably with, for example, "suitable for∼", "having the capacity to∼", "designed to∼", "adapted to∼", "made to∼", or "capable of∼" in a hardware or software manner in accordance to circumstances. In any situation, the expression "device configured to∼" may represent that the device is "capable of ∼" together with other devices or components. For example, the phrase "processor configured (or set) to perform A, B and C" may represent an exclusive processor (e.g., embedded processor) for performing a corresponding operation, or a generic-purpose processor (e.g., a central processing unit (CPU) or an application processor (AP)) capable of performing corresponding operations by executing one or more software programs stored in a memory device.

An electronic device according to various embodiments of the present document may, for example, include at least one of a smartphone, a tablet personal computer (PC), a mobile phone, a video phone, an electronic book reader, a desktop PC, a laptop PC, a netbook computer, a workstation, a server, a portable digital assistant (PDA), a portable multimedia player (PMP), an MPEG-1 audio layer-3 (MP3) player, a medical device, a camera or a wearable device. The wearable device may include at least one of an accessory type (e.g., a watch, a ring, a wristlet, an anklet, a necklace, glasses, a contact lens or a head-mounted-device (HMD)), a fabric or clothing integrated type (e.g., electronic clothes), a human-body mount type (e.g., a skin pad or tattoo) or a bio implantation type (e.g., an implantable circuit). According to certain embodiment, the electronic device may, for example, include at least one of a television (TV), a digital versatile disc (DVD) player, an audio system, a refrigerator, an air conditioner, a cleaner, an oven, a microwave, a washing machine, an air cleaner, a set-top box, a home automation control panel, a security control panel, a media box (for example, Samsung HomeSync™, Apple TV™ or Google TV™), a game console (e.g., Xbox™ or PlayStation™), an electronic dictionary, an electronic locking system, a camcorder or an electronic frame.

In another embodiment, the electronic device may include at least one of various medical devices (e.g., various portable medical measurement devices (e.g., a blood glucose sensor, a heat rate sensor, a blood pressure monitor, a body temperature meter, etc.), magnetic resonance angiography (MRA), magnetic resonance imaging (MRI), computed tomography (CT), a imaging equipment, an ultrasonic instrument, etc.)), a navigation device, a global navigation satellite system (GNSS), an event data recorder (EDR), a flight data recorder (FDR), a car infotainment device, an electronic equipment for ship (e.g., a vessel navigation device, a gyro compass, etc.), avionics, a security device, a car head unit, an industrial or domestic robot, a drone, an automatic teller's machine (ATM) of a financial institution, point of sales (POS) of shops, an internet of things (IoT) device (e.g., an electric bulb, various sensors, a sprinkler device, a fire alarm, a thermostat, a streetlight, a toaster, an exerciser, a hot water tank, a heater, a boiler, etc.).

According to certain embodiment, the electronic device may include at least one of a part of furniture, a building/structure or a car, an electronic board, an electronic signature receiving device, a projector or various metering devices (e.g., tap water, electricity, gas, radio wave metering devices or the like). In various embodiments, the electronic device may be flexible, or be a combination of two or more of the aforementioned various devices. The electronic device according to an embodiment of the present document is not limited to the aforementioned devices. In the present document, the term 'user' may denote a person who uses the electronic device or a device (e.g., an artificial-intelligent electronic device) which uses the electronic device.

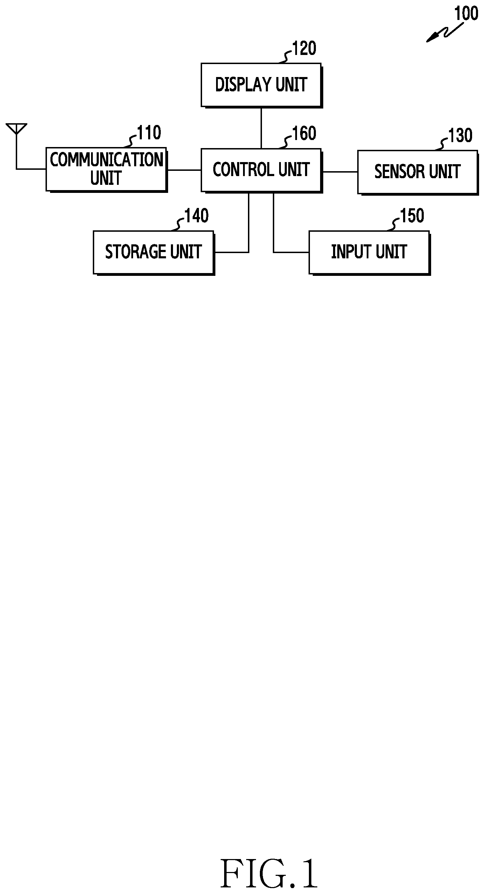

FIG. 1 illustrates a block diagram of an electronic device according to various embodiments of the disclosure.

As illustrated in FIG. 1, the electronic device 100 according to various embodiments may include a communication unit 110, a display unit 120, a sensor unit 130, a storage unit 140, an input unit 150, and a control unit 160.

The communication unit 110 may perform wireless communication in the electronic device 100. The communication unit 110 may communicate with an external device (not shown) in various communication schemes. For example, the external device may include an electronic device, a base station, a server, and a satellite. For this, the communication unit 110 may be accessed to at least any one of a mobile communication network, a data communication network, or a short-range communication network. For example, the communication scheme may include at least any one of long term evolution (LTE), LTE-advanced (LTE-A), code division multiple access (CDMA), wideband CDMA (WCDMA), universal mobile telecommunications system (UMTS), wireless broadband (WiBro), global system for mobile communications (GSM), wireless fidelity (WiFi), Bluetooth (BT), near field communications (NFC), global navigation satellite system (GNSS), etc.

The display unit 120 may output display data in the electronic device 100. The display data may represent information which is processed in the electronic device 100. For example, the display unit 120 may include at least any one of a liquid crystal display (LCD), a light emitting diode (LED) display, an organic LED (OLED) display, a micro electro mechanical systems (MEMS) display, and an electronic paper display.

The sensor unit 130 may, for example, measure a physical quantity or detect an activation state of the electronic device 100, and convert measured or sensed information into an electric signal. The sensor unit 130 may, for example, include at least one of a gesture sensor, a gyro sensor, an air pressure sensor, a magnetic sensor, an acceleration sensor, a grip sensor, a proximity sensor, a color sensor (e.g., a red, green, blue (RGB) sensor), a medical sensor, a temperature/humidity sensor, an illuminance sensor, a ultraviolet (UV) sensor, or a finger scan sensor. Additionally or alternatively, the sensor unit 130 may, for example, include an E-nose sensor, an electromyography (EMG) sensor, an electroencephalogram (EEG) sensor, an electrocardiogram (ECG) sensor, an infrared (IR) sensor, and/or an iris scan sensor. The sensor unit 130 may further include a control circuit for controlling at least one or more sensors belonging therein. The sensor unit 130 may be coupled with the input unit 150, to sense an input. For example, the finger scan sensor may be coupled with the input unit 150, to provide input data through fingerprint sensing.

The storage unit 140 may store operation programs of the electronic device 100. The storage unit 140 may store a majority of functions. Here, the functions may include a security mode setting function and/or a security mode releasing function. The storage unit 140 may store data that are provided in course of execution of the operation programs. And, the storage unit 140 may store data which is provided according to security mode setting or security mode releasing. For example, the storage unit 140 may store content or object to which a security mode has been set. Or, the storage unit 140 may store content or object of which the security mode has been released. Or, the storage unit 140 may store a set fingerprint. Or, the storage unit 140 may store passwords required in the security mode.

The input unit 150 may provide input data in the electronic device 100. The input unit 150 may provide input data correspondingly to a user input of the electronic device 100. For example, the input unit 150 may include a key pad, a dome switch, a physical button, a touch panel, and a jog shuttle. The input unit 120 may be coupled with the display unit 150 and be implemented as a touch screen.

The control unit 160 may control a general operation in the electronic device 100. At this time, the control unit 160 may perform various functions. The control unit 160 may include a function processing unit for each function. The function processing unit may substantially process each function. For example, the function processing unit may be an application processor (AP). The control unit 160 may control constituent elements of the electronic device 100. And, the control unit 160 may receive a command or data from the constituent elements of the electronic device 100, and process the received command or data. The control unit 160 may set or release a security mode. The control unit 160 may set content in the security mode. Or, the control unit 160 may release content from the security mode. For example, the content may include an icon corresponding to an application, an image, a background image, etc. The control unit 160 may sense an input through the input unit 150, and set content corresponding to the input in the security mode or release the same from the security mode.

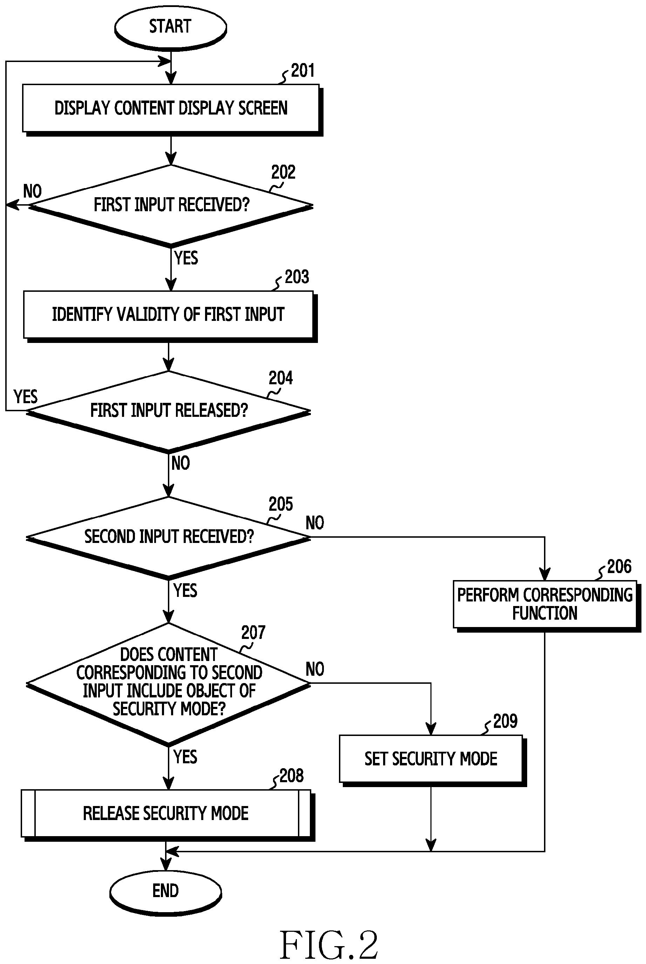

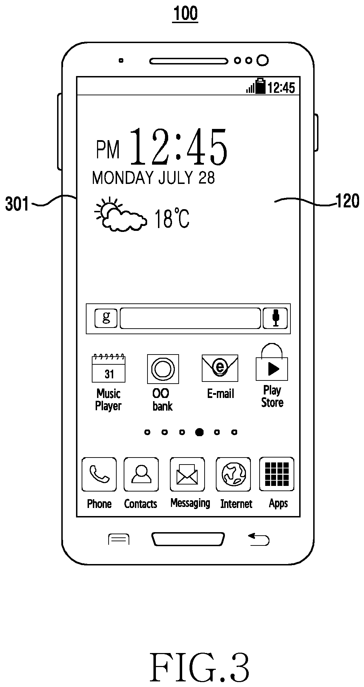

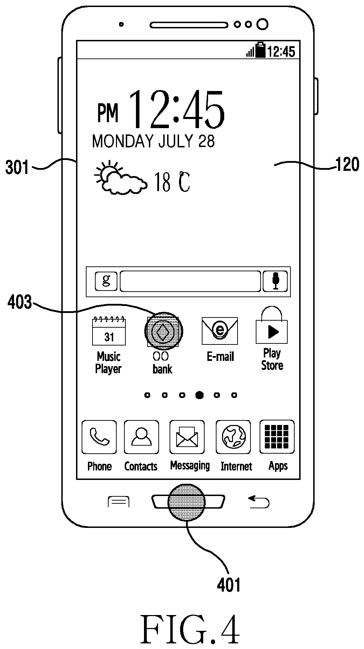

FIG. 2 is a flowchart illustrating a procedure of performing a method for operating an electronic device according to various embodiments. FIG. 3 and FIG. 4 are example diagrams illustrating an implementation example of an electronic device according to various embodiments.

As illustrated in FIG. 2, in operation 201, the control unit 160 may display a content display screen 301. For example, as illustrated in FIG. 3, the control unit 160 may display the content display screen 301 through the display unit 120. The content display screen 301 may display various contents. For example, the content may include an icon corresponding to an application, an image, a background image, etc. The contents may include various objects. The objects may be items which belong to each content. For example, in response to the content being the background image, the object may be the icon corresponding to the application. In response to the content being an icon corresponding to a mail application, the object may be mails. In response to the content being an icon corresponding to a memo application, the object may be memos. The content display screen may be a screen for releasing the security mode, or may be a screen for setting the security mode.

Next, in operation 202, the control unit 160 may sense the reception of a first input 401. As illustrated in FIG. 4, the control unit 160 may sense the reception of the first input 401 through the input unit 150 in operation 202. On the other hand, the input unit 150 may be coupled with the sensor unit 130 capable of sensing the first input 401. For example, the input unit 150 may be coupled with a finger scan sensor sensing a fingerprint, and the first input 401 may be an input for fingerprint recognition. Accordingly, in operation 202, the control unit 160 may sense the reception of the first input 401 for fingerprint recognition through the input unit 150 coupled with the finger scan sensor. On the other hand, an embodiment is not limited to this, and the first input 401 may be a user unique input for identifying a user of the electronic device 100, and the input unit 150 may be coupled with various sensor units 130 capable of sensing this first input 401.

On the other hand, the first input 401 may be an input before the displaying of the content display screen 301. That is, in response to the first input 401 being received in an OFF state of the display unit 120, the control unit 160 may change a screen into an ON state, and display the content display screen 301 as well. Or, the first input 401 may be an input after the displaying of the content display screen 301 as well. That is, the control unit 160 may display the content display screen 301 in an ON state of the display unit 120, and receive the first input 401 as well.

Next, in response to receiving the first input 401, in operation 203, the control unit 160 may identify the validity of the first input 401. For example, in response to the first input 401 being an input for fingerprint recognition, the control unit 160 may identify whether a fingerprint sensed through the input unit 150 is matched with a set fingerprint. Accordingly, in response to the fingerprint sensed through the first input 401 being matched with the set fingerprint, the control unit 160 may identify that the first input 401 is valid. In response to the fingerprint sensed through the first input 401 not being matched with the set fingerprint, the control unit 160 may identify that the first input 401 is not valid.

Next, in operation 204, the control unit 160 may sense the release of the first input 401. That is, the control unit 160 may identify whether the received first input 401 of operation 202 is continuously maintained.

On the other hand, in response to the first input 401 not being received, the control unit 160 may return to operation 201 and continuously display the content display screen 301. Also, in response to sensing the release of the first input 401, the control unit 160 may return to operation 201 and display the content display screen 301.

In response to the release of the first input 401 not being sensed, in operation 205, the control unit 160 may sense the reception of a second input 402. That is, the control unit 160 may sense whether the second input 402 is received through the input unit 150 in a state in which the previously received first input 401 is maintained. For example, the input unit 150 may include a touch panel capable of sensing a touch gesture on the display unit 120, and the second input 402 may be a touch gesture inputted onto the display unit 120. Accordingly, the control unit 160 may sense whether the second input 402 being the touch gesture is received through the input unit 150 including the touch panel. The touch gesture may include various gestures such as a tap touch, a long touch, etc.

In response to not sensing the reception of the second input 402, in operation 206, the control unit 160 may perform a corresponding function. For example, in operation 206, the control unit 160 may perform a set function in response to the first input 401 being maintained longer than a threshold time. In response to the first input 401 being maintained longer than the threshold time, the control unit 160 may switch a mode as well.

Next, in operation 207, the control unit 160 may identify whether content corresponding to the second input 402 includes an object of a security mode. For example, in response to the content corresponding to the second input 402 being a background image, the control unit 160 may identify whether an application of the security mode exists. Or, in response to the content corresponding to the second input 402 being a mail application, the control unit 160 may identify whether mails of the security mode exist. Or, in response to the content corresponding to the second input 402 being a memo application, the control unit 160 may identify whether memos of the security mode exist. On the other hand, the control unit 160 may identify whether the content itself corresponding to the second input 402 is in the security mode as well. For example, in response to the content corresponding to the second input 402 being an application, the control unit 160 may identify whether the corresponding application is an application of the security mode requiring a password input or authentication.

In response to the content corresponding to the second input 402 including the object of the security mode, or the content itself corresponding to the second input 402 being in the security mode, in operation 208, the control unit 160 may release the security mode. For example, in response to the content corresponding to the second input 402 including the object of the security mode, the control unit 160 may release the security mode of the objects. Accordingly, the control unit 160 may execute or display the objects. Or, in response to the content itself corresponding to the second input 402 being in the security mode, the control unit 160 may immediately execute the content. That is, the control unit 160 may execute the content, without receiving a separate password input for content execution or going through an authentication process.

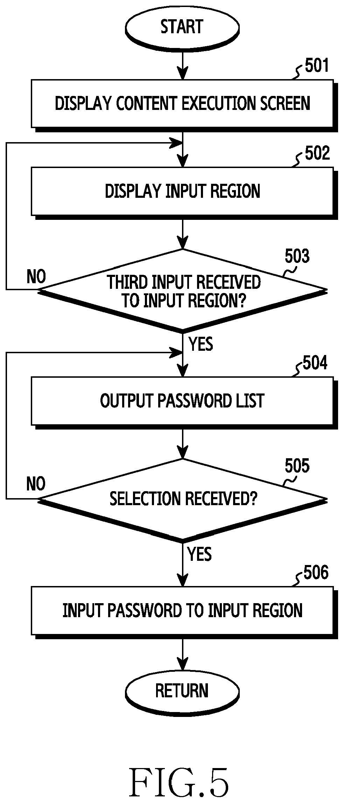

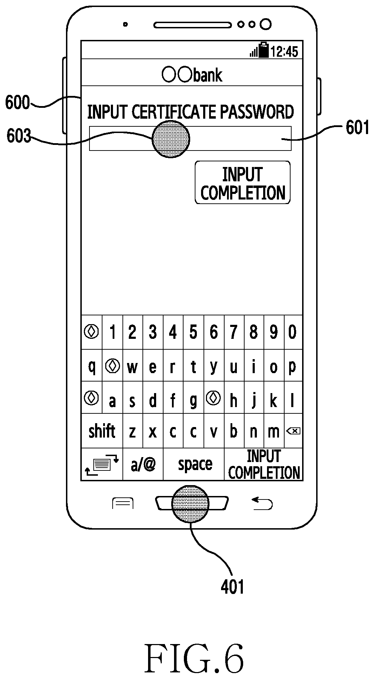

FIG. 5 is a flowchart of an operation of releasing a security mode in FIG. 2. FIG. 6 to FIG. 8 are example diagrams of a screen of an electronic device according to various embodiments. FIG. 5 to FIG. 8 illustrate to explain an operation of releasing the security mode through a password input at the time of execution of the content corresponding to the second input 402.

As illustrated in FIG. 5, in operation 501, the control unit 160 may display a content execution screen 600. The control unit 160 may execute and display the content corresponding to the second input 402. For example, in response to the content corresponding to the second input 402 being a bank application, as illustrated in FIG. 6, the control unit 160 may display a screen 600 executing the bank application.

Next, in operation 502, in response to the content execution screen 600 including an input region 601, the control unit 160 may display the input region 601. The input region 601 may be a region for receiving a password input.

Next, in operation 503, the control unit 160 may sense the reception of a third input 603 to the input region 601. The third input 603 may include a touch gesture. The touch gesture may include various gestures such as a tap touch, a long touch, etc.

In response to not sensing the reception of the third input 603, the control unit 160 may return to operation 502. That is, in response to not sensing the reception of the third input 603, the control unit 160 may continuously display the content execution screen 600 including the input region 601.

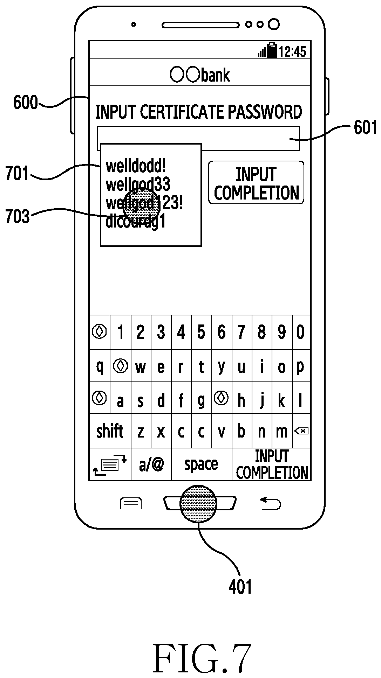

In response to sensing the reception of the third input 603, as illustrated in FIG. 7, in operation 504, the control unit 160 may output a password list 701. The control unit 160 may output the password list 701 stored in the storage unit 140. The control unit 160 may display the outputted password list 701 on the display unit 120. For example, the control unit 160 may display the password list 701 in adjacent to the input region 601. The control unit 160 may display the password list 701 at a lower end of the input region 601.

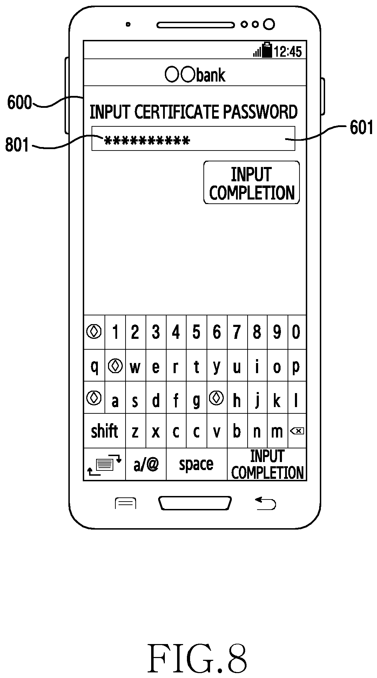

Next, in operation 505, the control unit 160 may sense whether a selection 703 is received. That is, in operation 505, the control unit 160 may sense an input for the password selection 703 within the outputted password list 701. As illustrated in FIG. 8, in response to the password selection being received, in operation 506, the control unit 160 may input a selected password 801 to the input region 601. The control unit 160 may display the selected password 801 in the input region 601, in a security-marked state. For example, the control unit 160 may display the selected password 801 in the input region 601, as "*'.

Various embodiments may release a security mode of content and execute the content, by a simple operation. For example, various embodiments may simply execute the content, without inputting a separate password for content execution or going through a complex authentication process. Or, at a time a user executes content requiring a password input, the user may easily fast input a password temporarily (one time). That is, a user convenience may be improved in that there is no need to typewrite security information such as the password. Particularly, because a function requiring a password becomes recently many, it may be difficult to remember a password corresponding to a corresponding function, but one may easily find the password by outputting a password list and user's selecting. Also, various embodiments may improve security standards in that releasing a security mode by using user unique identification such as fingerprint.

In response to the password selection not being received, the control unit 160 may return to operation 504. That is, in response to the password selection not being received, the control unit 160 may continuously display the outputted password list.

On the other hand, according to various embodiments, in the operation of releasing the security mode, the control unit 160 may omit a separate password input at the time of execution of the content corresponding to the second input 402, and immediately execute the content as well.

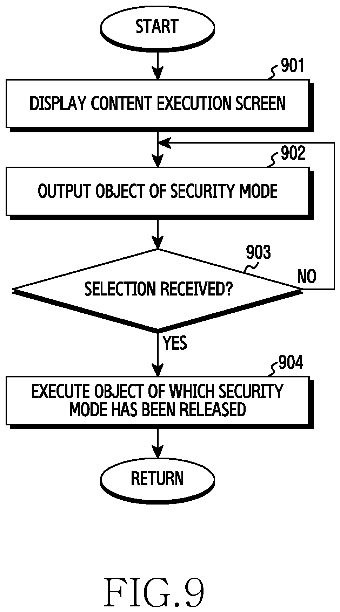

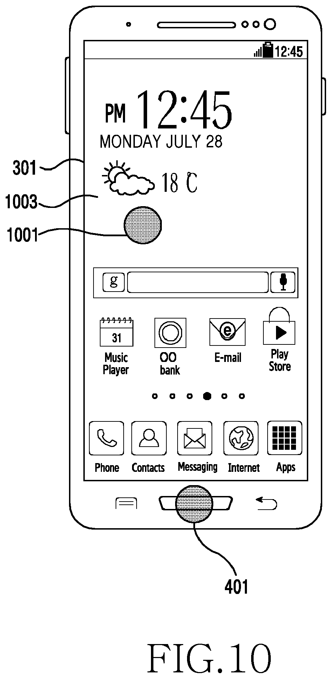

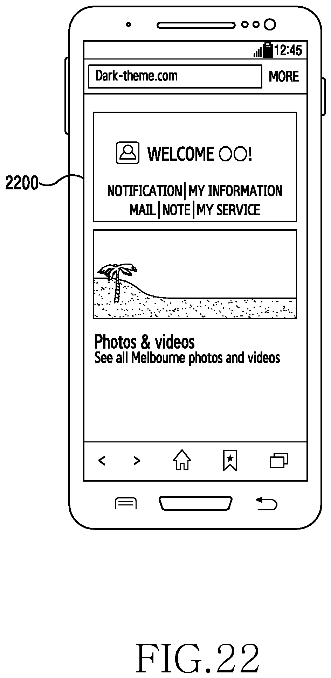

FIG. 9 is a flowchart of a security mode release operation of FIG. 2. FIG. 10 and FIG. 22 are example diagrams illustrating an implementation example of an electronic device according to various embodiments. FIG. 9 to FIG. 22 illustrate to explain an operation of releasing a security mode in response to\ content corresponding to a second input 1002 including an object of the security mode.

With reference to FIG. 9 to FIG. 11, a description is made for a security mode release operation when the content corresponding to the second input 1001 is a background image 1003.

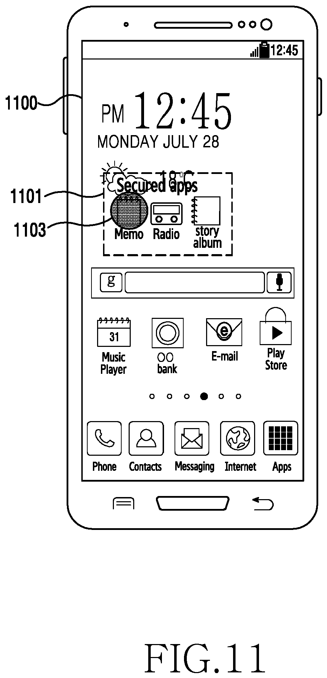

As illustrated in FIG. 9 and FIG. 10, in response to the content corresponding to the second input 1001 being the background image 1003, in operation 901, the control unit 160 may display a content execution screen. For example, as illustrated in FIG. 11, the control unit 160 may display a screen 1100 executing the content corresponding to the second input 1001 through the display unit 120.

Next, in operation 902, the control unit 160 may output an object 1101 of a security mode. Meantime, in response to the content corresponding to the second input 1001 being the background image 1003, as illustrated in FIG. 11, the control unit 160 may output icons 1101 corresponding to applications of the security mode in the content execution screen 1100. The application of the security mode is an application to which a password has been set. To execute the application, the input of the set password may be required. The control unit 160 may display the icons 1101 corresponding to the applications of the security mode, in the content execution screen 1100, through the display unit 120. On the other hand, the control unit 160 may output and display only the icons 1101 corresponding to the applications of the security mode through the display unit 120.

Next, in operation 903, the control unit 160 may sense a selection 1103. That is, in operation 903, the control unit 160 may sense an input for the selection 1103 among the outputted objects of the security mode. For example, as illustrated in FIG. 11, the control unit 160 may sense the selection 1103 among the outputted icons 1101 corresponding to the applications of the security mode. The object of the security mode is an object to which a password has been set. To execute or display the object, the input of the set password may be required.

In response to the selection 1103 being sensed, in operation 904, the control unit 160 may execute an object of which the security mode has been released. That is, the control unit 160 may release the security mode of the application corresponding to the selection 1103 and execute the application.

In response to the selection not being sensed, the control unit 160 may return to operation 902.

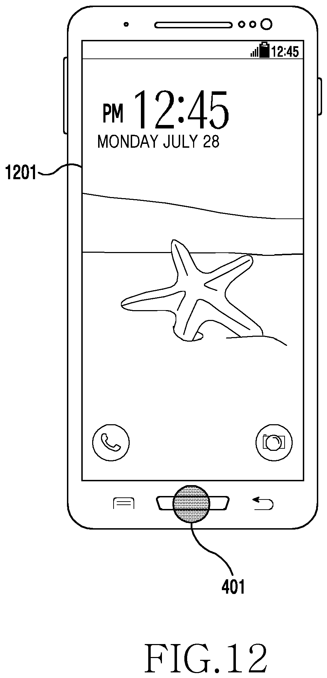

With reference to FIG. 12, a description is made for a security mode release operation when a content display screen is a background screen 1201. According to various embodiments, as illustrated in FIG. 12, in response to the content display screen being the background screen 1201, only the first input 401 may be received to perform the security mode release operation. For example, in response to the first input 401 being maintained for a threshold time or longer, as illustrated in FIG. 11, the control unit 160 may output the icon 1101 corresponding to the application of the security mode as well. In response to the selection 1103 through an input among the outputted application icons 1101 of the security mode being received in a state where the first input 401 is maintained, the control unit 160 may release the security mode of the application and execute the application.

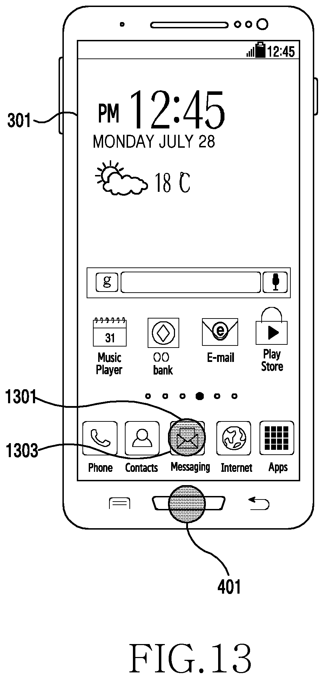

Meantime, with reference to FIG. 13 to FIG. 18, a description is made for a security mode release operation when content corresponding to a second input 1301 is an application.

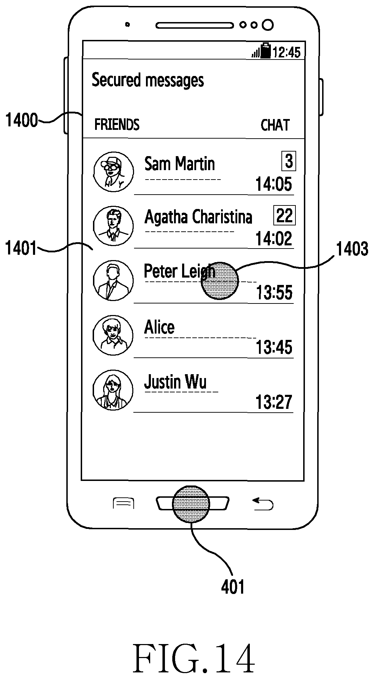

According to various embodiments, in response to the content corresponding to the second input 1301 being an icon 1303 corresponding to an application as illustrated in FIG. 13, in operation 901, the control unit 160 may display a content execution screen 1400 as illustrated in FIG. 14.

Next, in operation 902, the control unit 160 may output objects 1401 of a security mode. The control unit 160 may display the objects 1401 of the security mode in the content execution screen 1400 through the display unit 120. For example, in response to the content corresponding to the second input 1301 being a message application, the control unit 160 may output and display messages 1401 to which the security mode has been set, in the content execution screen 1400. Meantime, the control unit 160 may display not only the object 1401 of the security mode but also objects not being in the security mode through the display unit 120, together. Or, the control unit 160 may display only the objects 1401 of the security mode through the display unit 120 as well. That is, the control unit 160 may display only the messages 1401 of the security mode through the display unit 120 as well.

In operation 903, the control unit 160 may sense whether it receives a selection 1403. That is, as illustrated in FIG. 14, the control unit 160 may sense whether the selection 1403 through an input among the outputted objects 1401 of the security mode is received. For example, the control unit 160 may sense whether the selection 1403 through the input among outputted messages of the security mode is received in a state where the first input 401 is maintained.

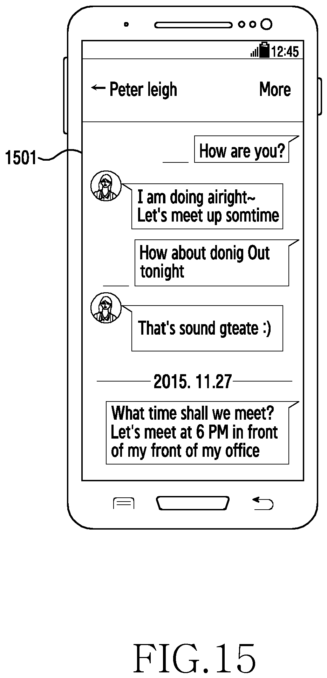

In response to the selection 1403 being received, in operation 904, the control unit 160 may execute the object of which the security mode has been released. That is, the control unit 160 may release the security mode of the object corresponding to the selection 1403 and execute the object. For example, as illustrated in FIG. 15, the control unit 160 may release a security mode of a message corresponding to the selection 1403 and display the message on the display 120. That is, the control unit 160 may display a message display screen 1501 of which the security mode has been released.

In response to the selection not being received, the control unit 160 may return to operation 902.

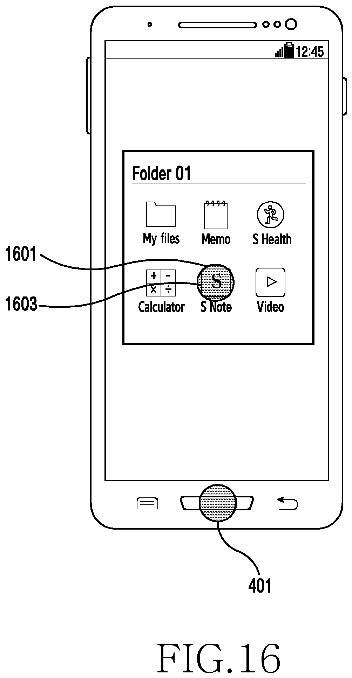

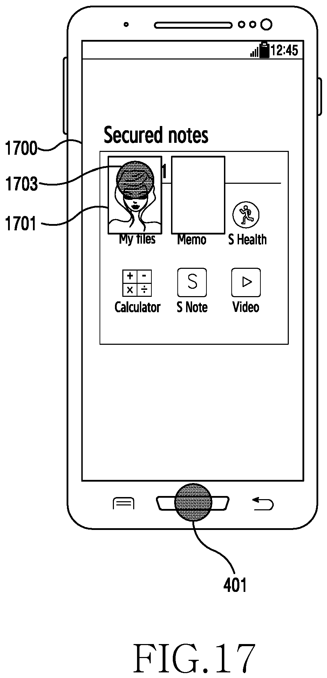

According to various embodiments, in response to content corresponding to a second input 1601 being an icon 1603 corresponding to a note application as illustrated in FIG. 16, in operation 901, the control unit 160 may display a content execution screen 1700 as illustrated in FIG. 17. That is, the control unit 160 may display the screen 1700 executing the note application.

In operation 902, the control unit 160 may output objects 1701 of a security mode. For example, in response to the content corresponding to the second input 1601 being the icon 1603 corresponding to the note application, the control unit 160 may output and display the note 1701 to which the security mode has been set, in the content execution screen 1700. Meantime, the control unit 160 may display not only the note of the security mode but also notes not being in the security mode through the display unit 120, together, as well. Or, the control unit 160 may display only the notes of the security mode through the display unit 120 as well.

In operation 903, the control unit 160 may identify whether it receives a selection. That is, as illustrated in FIG. 17, the control unit 160 may identify whether an input 1703 among the outputted objects 1701 of the security mode is received in a state where the first input 401 is maintained. For example, the control unit 160 may identify whether the selection 1703 through an input among the outputted notes of the security mode is received.

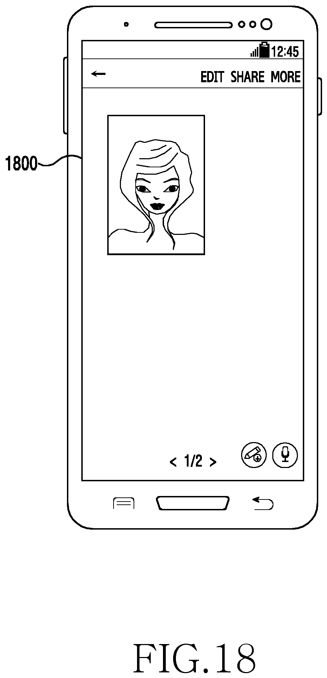

In response to the selection 1703 being received, in operation 904, the control unit 160 may execute the object of which the security mode has been released. That is, the control unit 160 may release the security mode of the object corresponding to the selection 1703 and execute the object. For example, as illustrated in FIG. 18, the control unit 160 may release the security mode of the note corresponding to the selection 1703 and display the note. That is, the control unit 160 may display a screen 1800 executing the note of which the security mode has been released. In response to the selection not being received, the control unit 160 may return to operation 902. That is, in response to the selection not being received, the control unit 160 may continuously display the outputted object of the security mode.

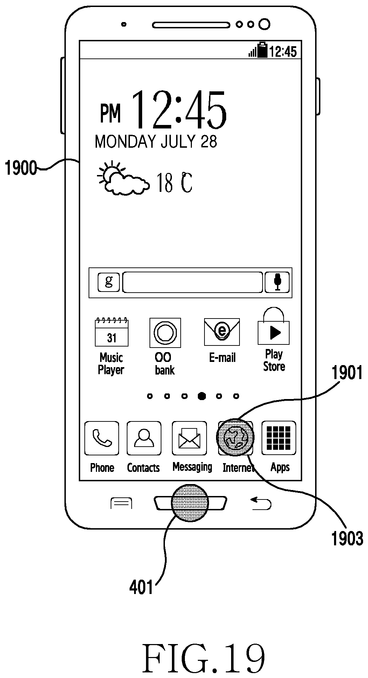

Meantime, with reference to FIG. 19 and FIG. 22, a description is made for a security mode release operation when content corresponding to a second input 1901 is an application.

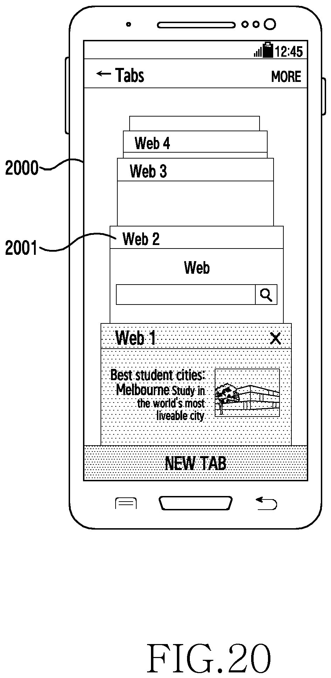

According to various embodiments, in response to the content corresponding to the second input 1901 is an icon 1903 corresponding to an application as illustrated in FIG. 19, in operation 901, the control unit 160 may display a content execution screen 2000 as illustrated in FIG. 20. For example, the control unit 160 may display the screen 2000 executing an Internet application.

Next, in operation 902, the control unit 160 may output objects 2001 of a security mode. The control unit 160 may display the icons 2001 of the security mode in the content execution screen 2000 through the display unit 120. For example, in response to the content corresponding to the second input 1901 being the icon 1903 corresponding to the Internet application, the control unit 160 may output and display the web sites 2001 to which the security mode has been set, in the content execution screen 2000. That is, the control unit 160 may display secret taps 2001 in the content execution screen 2000. The control unit 160 may display only Internet sites of the security mode through the display unit 120. According to various embodiments, the control unit 160 may display by only a simple operation, without separate menu selection or executing a separate application in order to execute the secret tap or the Internet sites of the security mode.

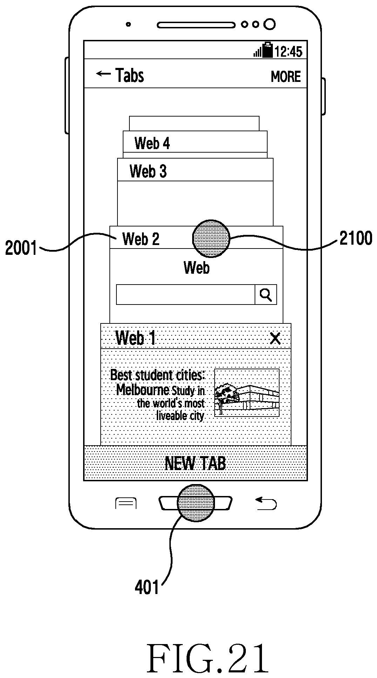

In operation 903, the control unit 160 may identify whether it receives a selection. That is, as illustrated in FIG. 21, the control unit 160 may identify whether a selection 2100 through an input among the outputted web sites 2001 is received. For example, the control unit 160 may identify whether the selection 2100 through the input among the outputted web sites 2001 is received in a state where the first input 401 is maintained.

In response to the selection 2100 being received, in operation 904, the control unit 160 may execute the object of which the security mode has been released. That is, the control unit 160 may release the security mode of the object corresponding to the selection 2100 and execute the object. For example, as illustrated in FIG. 22, the control unit 160 may automatically log in the web site 2001 corresponding to the second input 2100. That is, according to various embodiments, the control unit 160 may execute the web site 2001 through a simple operation, without receiving a separate password input for web site 2001 execution or going through an authentication process. Accordingly, the control unit 160 may display a web site execution screen 2200 of a log-in state.

Meantime, in FIG. 2, in response to the control unit 160 identifying that content corresponding to a second input not including an object of a security mode in operation 207, the control unit 160 may set the security mode in operation 209. That is, in response to it being identified that the content corresponding to the second input includes an object not being in the security mode (being security-released), in operation 209, the control unit 160 may set the security mode. For example, in response to the content corresponding to the second input being an icon corresponding to an application, the control unit 160 may set the corresponding application in the security mode. Or, in response to the content corresponding to the second input being an object, the control unit 160 may set the corresponding object in the security mode. That is, in response to the object corresponding to the second input being an item belonging to each content, the control unit 160 may set each item in the security mode. In response to setting in the security mode, the control unit 160 may replace with a lock mark without displaying corresponding content. The control unit 160 may set the security mode to the content corresponding to the second input, and request for security mode release at the time of content execution.

Various embodiments may set the security mode by a simple operation. That is, various embodiments may solve that an inconvenience of security setting is caused because a security mode setting method is different every application. Various embodiments may set various contents in a security mode by the same operation.

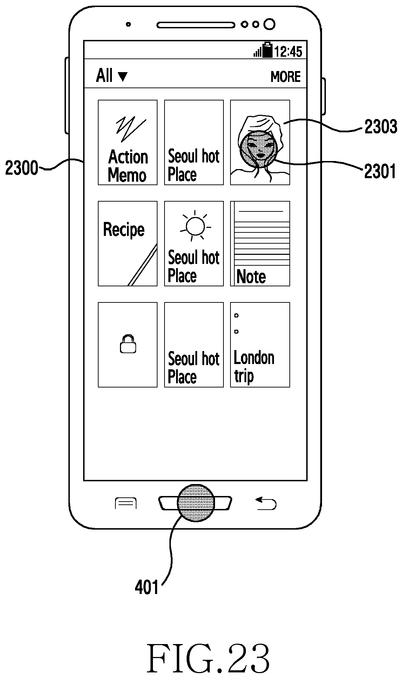

FIG. 23 to FIG. 28 are example diagrams illustrating an implementation example of an electronic device according to various embodiments. FIG. 23 to FIG. 28 illustrate to explain an operation of setting a security mode.

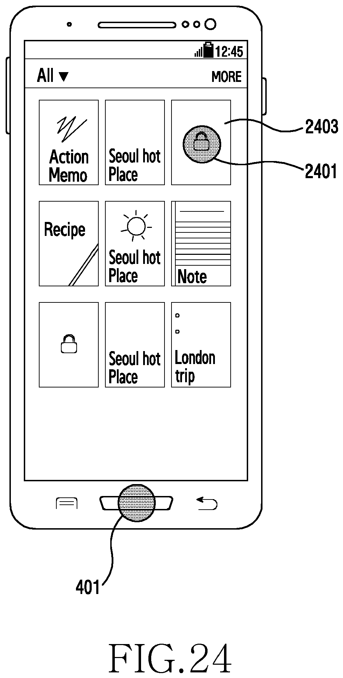

In response to content 2303 corresponding to a second input 2301 among contents displayed in a content display screen 2300 not including an object of a security mode as illustrated in FIG. 23, the control unit 160 may set the content 2303 corresponding to the second input 2301 in the security mode as illustrated in FIG. 24. That is, in response to the content 2303 corresponding to the second input 2301 not being in the security mode, the control unit 160 may set the corresponding content 2303 in the security mode.

On the other hand, the control unit 160 may mark (2403) that the security mode has been set to the content 2303 set in the security mode. For example, the control unit 160 may do a lock mark (2403) on the content 2303 set in the security mode. In response to not releasing the security mode, the control unit 160 may do only the lock mark 2403 without displaying an image.

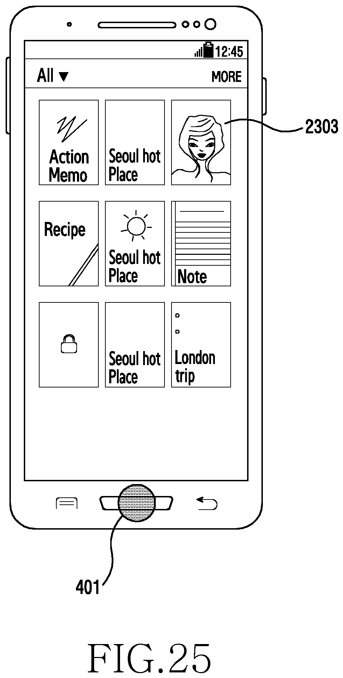

In response to a second input 2401 being again received while the first input 401 is maintained for this content 2303 set in the security mode, the control unit 160 may release the security mode of the content 2303 as illustrated in FIG. 25. That is, only in response to the image set in the security mode being released from the security mode, the control unit 160 may display an image.

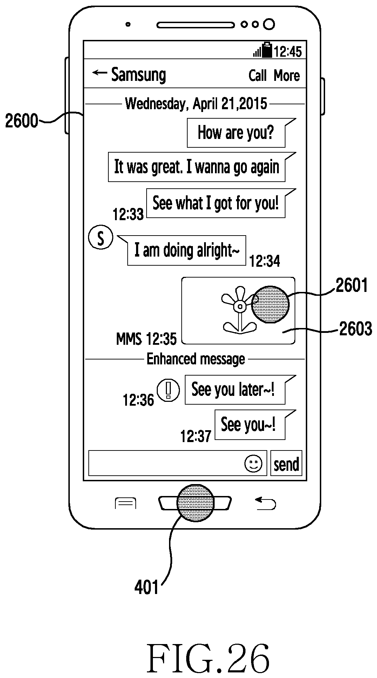

According to various embodiments, as illustrated in FIG. 26, a content display screen 2600 may be a message screen. In response to it being identified that an image 2603 displayed in the content display screen 2600 is not in the security mode, the control unit 160 may set the image 2603 in the security mode by receiving a second input 2601 onto the image 2603.

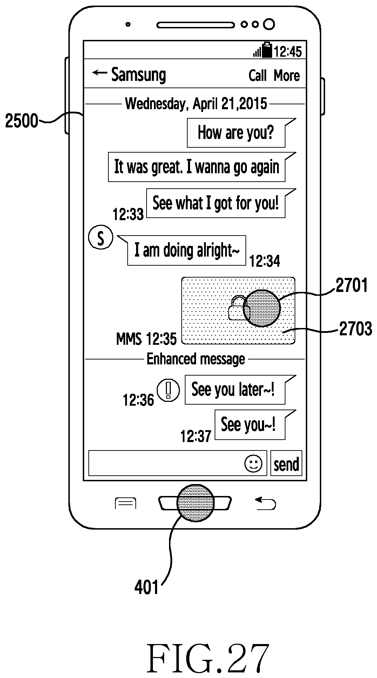

As illustrated in FIG. 27, the control unit 160 may mark (2703) that the security mode has been set to the image set in the security mode. For example, the control unit 160 may do a lock mark (2703) on the image set in the security mode. In response to not releasing the security mode, the control unit 160 may do only the lock mark 2703 without displaying an image.

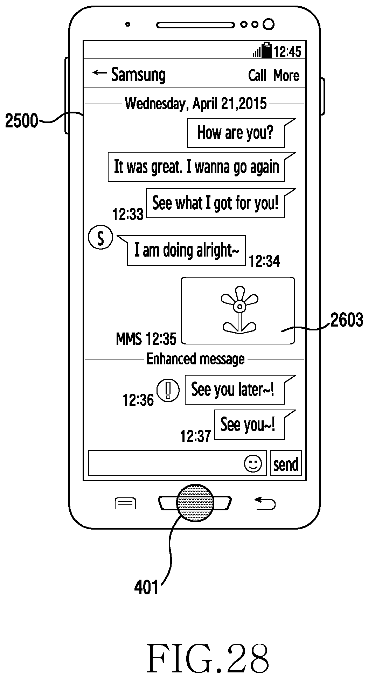

In response to a second input 2701 being again received while the first input 401 is maintained for the lock-marked (2703) image as illustrated in FIG. 27, the control unit 160 may release the security mode of the content 2603. That is, as illustrated in FIG. 28, the control unit 160 may display the content of which the security mode has been released. Regarding the image set in the security mode, the control unit 160 may display the image only in response to releasing the security mode.

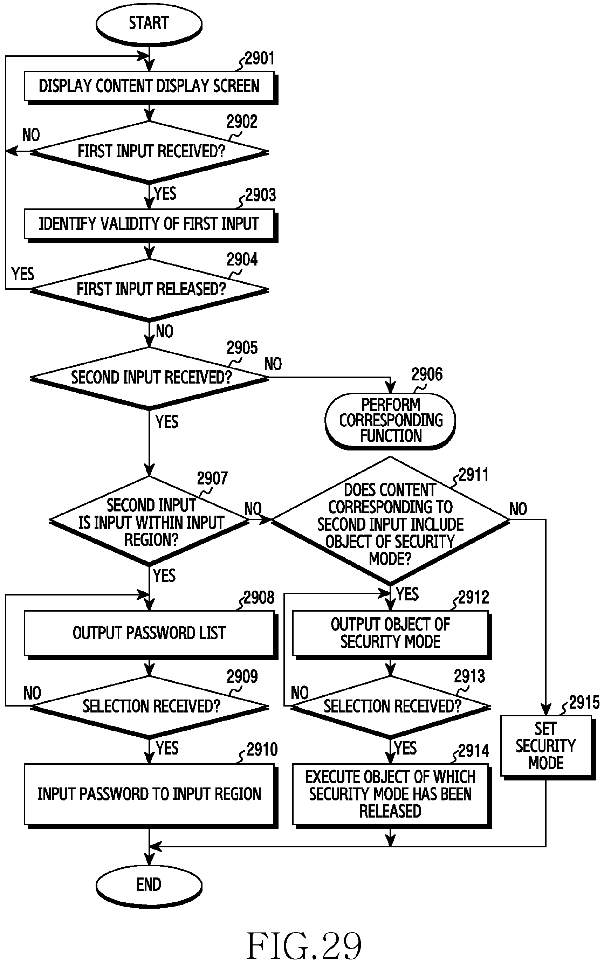

FIG. 29 is a flowchart illustrating a procedure of performing a method for operating an electronic device according to various embodiments.

As illustrated in FIG. 29, operation 2901 to operation 2906 are similar with operation 201 to operation 206 of FIG. 2 and thus, a detailed description thereof may be omitted.

In operation 2907, the control unit 160 may identify whether a second input is an input within the input region 601. That is, a content display screen includes the input region 601, and the control unit 160 may identify whether the second input is the input within the input region 601.

Next, in response to the second input being the input within the input region 601, in operation 2908, the control unit 160 may output a password list. Meantime, in operation 2908, in response to the second input being the input within the input region 601, the control unit 160 may further perform an operation of identifying whether the input region 601 is a security information input region which requires a password or user authentication. In response to it being identified that the input region 601 is the security information input region, the control unit 160 may output the password list. In response to it being identified that the input region 601 is not the security information input region, the control unit 160 may not output the password list.

Next, operation 2909 and operation 2910 are similar with operation 505 and operation 506 of FIG. 5 and thus, a detailed description thereof may be omitted.

Meantime, in response to it being identified that the second input is not the input within the input region 601 in operation 2907, the control unit 160 may perform operation 2911. That is, in operation 2911, the control unit 160 may identify whether content corresponding to the second input includes an object of a security mode.

In response to the content corresponding to the second input including the object of the security mode, in operation 2912, the control unit 160 may output the objects of the security mode. Meantime, in response to the content itself corresponding to the second input being in the security mode, the control unit 160 may release the security mode and immediately execute the content as well. That is, the control unit 160 may omit operation 2912 and operation 2913, and perform operation 2914.

Next, in operation 2913, the control unit 160 may sense whether it receives a selection. That is, the control unit 160 may identify whether an input for a selection among the outputted objects of the security mode is received. In response to the selection among the outputted objects of the security mode being received, in operation 2914, the control unit 160 may release the security mode, to execute the object. For example, the control unit 160 may display the selected object on the display unit 120. In response to the selection not being received, the control unit 160 may return to operation 2912. That is, in response to the selection not being received, the control unit 160 may continuously display the outputted object of the security mode.

Meantime, in response to the content corresponding to the second input not including the object of the security mode, in operation 2915, the control unit 160 may set the security mode to the content corresponding to the second input. That is, in response to that the content corresponding to the second input including an object of security release, in operation 2915, the control unit 160 may set the security mode to the object. The control unit 160 may set the security mode to the content corresponding to the second input, to require the release of the security mode at the time of content execution.

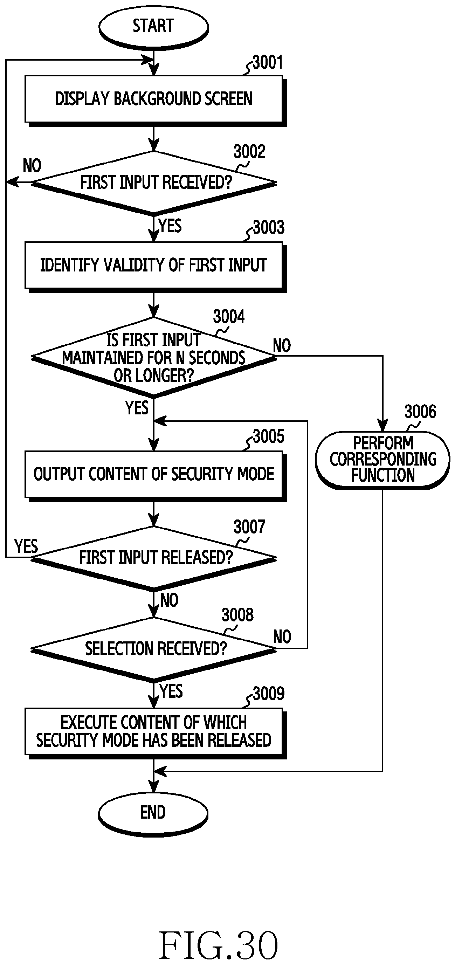

FIG. 30 is a flowchart illustrating a procedure of performing a method for operating an electronic device according to various embodiments. As illustrated in FIG. 30, in operation 3001, the control unit 160 may display a background image.

Next, operations 3002 and 3003 are similar with operations 202 and 203 of FIG. 2 and thus, a detailed description thereof may be omitted.

Next, in operation 3004, the control unit 160 may identify whether the first input is maintained for a threshold time or longer. For example, the control unit 160 may identify whether the first input is maintained for N seconds or longer through the sensor unit 130 coupled with the input unit 150. For example, the control unit 160 may identify whether the first input for fingerprint recognition is maintained for N seconds or longer through a finger scan sensor coupled with the input unit 150.

In response to it being identified that the first input is maintained for N seconds or longer, in operation 3005, the control unit 160 may output content of a security mode. For example, the control unit 160 may output an icon corresponding to an application of the security mode. The control unit 160 may display the outputted icon corresponding to the application of the security mode through the display unit 120.

Meantime, in response to it being identified that the first input is not maintained for N seconds or longer, in operation 3006, the control unit 160 may perform a corresponding function. For example, the control unit 160 may terminate the background screen, and display a content display screen on the display unit 120. Or, the control unit 160 may switch a mode.

Next, in operation 3007, the control unit 160 may sense the release of the first input. That is, in operation 3007, the control unit 160 may sense whether the received first input is continuously maintained. In response to sensing the release of the first input, the control unit 160 may return to operation 3001 and display the background image. Or, the control unit 160 may display the content display screen as well. Also, the control unit 160 may terminate the displaying of the outputted content of the security mode.

Next, in operation 3008, the control unit 160 may sense whether it receives a selection. That is, the control unit 160 may sense whether an input for a selection among the contents of the security mode outputted in operation 3005 is received.

In response to the selection being received, in operation 3009, the control unit 160 may execute the content of which the security mode has been released. That is, the control unit 160 may release the security mode of the content corresponding to the selection, and execute the content. In response to the selection not being received, the control unit 160 may return to operation 3005. That is, in response to the selection not being received, the control unit 160 may continuously display the outputted content of the security mode.

A feature, structure, effect, etc. described in the aforementioned embodiment are included in at least one embodiment of the disclosure, and are not necessarily limited only to one embodiment. Further, the feature, structure, effect, etc. illustrated in each embodiment are possible to be combined or modified and embodied even in relation to other embodiments by a person having ordinary skill in the art to which embodiments pertain. Accordingly, substance related with this combination and modification should be construed as being included in the scope of the disclosure.

Also, the above description has been made centering on embodiments, but this is just an example and does not limit the disclosure, and it will be able to be appreciated by a person having ordinary skill in the art to which the disclosure pertains that various medications and applications not illustrated above are possible without departing from essential characteristics of the present embodiment. For example, each constituent element shown in detail in embodiments may be modified and executed. And, differences related with this modification and application should be construed as being included the scope of the disclosure defined by the accompanying claims.

## Claims

1. A method for operating an electronic device, the method comprising:
receiving a first input;
identifying the validity of the first input;
receiving a second input while maintaining the first input; and
controlling a security mode function according to content corresponding to the second input.

2. The method of claim 1, wherein the first input comprises a fingerprint input.

3. The method of claim 1, wherein controlling the security mode function comprises releasing a security mode in response to the content corresponding to the second input having been set in the security mode.

4. The method of claim 1, wherein controlling the security mode function comprises setting a security mode in response to the content corresponding to the second input having been set as security release.

5. The method of claim 3, wherein releasing the security mode comprises:
displaying an input region;
receiving a third input to the input region;
outputting a password list to a content execution screen;
receiving a selection in the password list; and
inputting a password to the input region.

6. The method of claim 3, wherein releasing the security mode comprises:
outputting an object of the security mode;
receiving a selection of the object; and
releasing a security of the selected object, and executing the object.

7. The method of claim 6, wherein releasing the security mode comprises executing an application in response to the selected object being the application.

8. The method of claim 1, wherein identifying the validity of the first input further comprises identifying whether the first input is maintained for a threshold time or longer.

9. An electronic device comprising:
a display unit;
an input unit for receiving an input; and
a control unit operably coupled with the display unit and the input unit,
wherein the control unit configured to
receive a first input through the input unit,
identify the validity of the first input,
receive a second input while maintaining the first input, and
control a security mode function according to content corresponding to the second input.

10. The electronic device of claim 9, wherein the first input comprises a fingerprint input.

11. The electronic device of claim 9, wherein the control unit configured to release a security mode in response to the content corresponding to the second input having been set in the security mode.

12. The electronic device of claim 9, wherein the control unit configured to set a security mode in response to the content corresponding to the second input having been set as security release.

13. The electronic device of claim 11, wherein the control unit configured to:
display an input region on the display unit,
receive a third input to the input region, outputs a password list to a content execution screen,
receive a selection in the password list, and
input a password to the input region.

14. The electronic device of claim 11, wherein the control unit configured to:
output an object of the security mode,
receive a selection of the object, and
release a security of the selected object and executes the object.

15. The electronic device of claim 11, wherein the control unit configured to identify whether the first input is maintained for a threshold time or longer.
